(19) Europäisches Patentamt
European Patent Office
Office européen des brevets

(11) EP 1 202 262 A1

(12) **EUROPEAN PATENT APPLICATION**

(43) Date of publication:
**02.05.2002 Bulletin 2002/18**

(51) Int Cl.[7]: **G11B 7/24**, G11B 7/26

(21) Application number: **00123083.8**

(22) Date of filing: **24.10.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **3M Innovative Properties Company**
**St. Paul, Minnesota 55133-3427 (US)**

(72) Inventor: **Schoeppel, Wolfgang**
**41470 Neuss (DE)**

(74) Representative: **Wilhelm, Stefan M. et al**
**Office of Intellectual Property Counsel,**
**c/o 3M Deutschland GmbH,**
**Carl-Schurz-Strasse 1**
**41453 Neuss (DE)**

(54) **Optical storage medium**

(57) The invention refers to an optical storage medium from which information can be read out and/or into which information can be recorded with a light beam (6), said optical storage medium comprising one or more base members (1) bearing on the side of the base members (1) on which the light beam (6) is incident, one or more information storage layers (3), at least one light-transmissive cover film (5) and one or more light-transmissive adhesive layers (4) bonding said cover films (5) to each other, to the surface (2) of the base members (1) on which the light beam (6) is incident and/or to one or more information storage layers (3), at least one of said adhesive layers being obtained by applying a curable liquid precursor of said adhesive with subsequent curing, said cover films (5) exhibiting a vertical birefringence of less than 0.001 at 20 °C at least at the wavelength or wavelength spectrum, respectively, of said light beam (6).

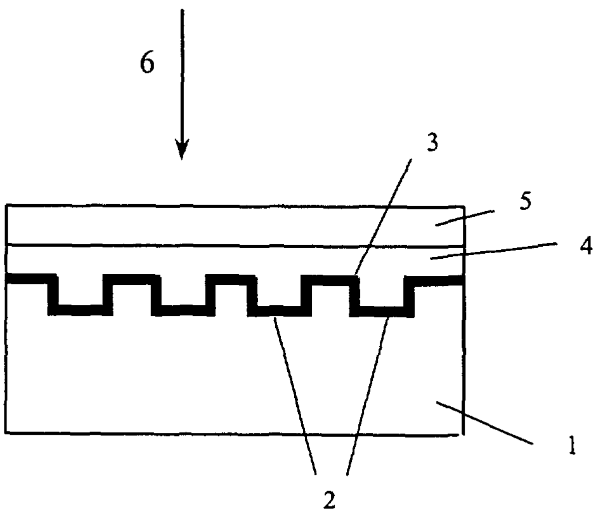


*Fig. 1a*

EP 1 202 262 A1

## Description

Field of the invention

The present invention refers to an optical storage medium and, in particular, to a Digital Video Recordable disc (DVR) from which information can be read out and/or into which information can be recorded with a light beam, said optical storage medium comprising at least one base member bearing on the side of the base member on which the light beam is incident, one or more readable and/or recordable information storage layers and one or more light-transmissive cover films. The present invention furthermore refers to a method of manufacturing an optical storage medium and, in particular, to a Digital Video Recordable disc (DVR).

Background of the invention

DVR discs exhibit a high storage capacity which renders them useful for digital recording and storage.
Typical constructions and formats of DVR discs are described, for example, in EP 0,729,141, EP 0,867,873 and EP 0,874,362.
DVR discs generally comprise a disc-shaped substrate or base member exhibiting on one or both major surfaces an information storage layer comprising a structure of lands and grooves. The DVR discs further comprise a light-transmissive cover film which is applied to the information storage layer.
It is disclosed in the co-pending European patent application EP 99 107 975.7 filed by the present applicant on April 22, 1999, that the transmittance of optical storage media and, in particular, DVRs, with respect to linearly polarized light can be improved by using light-transmissive cover films being essentially optically isotropic and, more preferably, exhibiting a vertical birefringence of less than 0.001 in each case at least at 20 °C and at least at the wavelength or wavelength spectrum, respectively, of the impinging light beam. It is furthermore disclosed in EP 99 107 975.7 that such light-transmissive cover films are bonded to each other, to the surface of the base member on which the light beam is incident, and/or to the information storage layer by one or more pressure-sensitive adhesive layers. The pressure-sensitive adhesive layers preferably exhibit a thickness of 10 -100 micron in order to allow for convenient handling. In more complicated constructions of the DVR-type optical recording media comprising more than one light-transmissive cover films, two or more pressure-sensitive adhesive layers are required which may result in an undesirable decrease of the overall transmission of such optical recording media due to the relatively high thickness of the pressure-sensitive adhesive layers. Also, the overall value of the thickness variation of the optical recording media may become undesirably high.
It was therefore an object of the present invention to provide alternative methods of preparing optical recording media such as DVRs in addition to those disclosed in EP 99 107 975.7. It was another object of the present invention to provide optical storage media such as DVRs obtained by such alternative method.
Other objects of the present invention are apparent from the detailed specification enclosed.

Brief description of the invention

The present invention relates to an optical storage medium from which information can be read out and/or into which information can be recorded with a light beam, said optical storage medium comprising one or more base members bearing on the side of the base members on which the light beam is incident, one or more information storage layers, at least one light-transmissive cover film and one or more light-transmissive adhesive layers bonding said cover films to each other, to the surface of the base members on which the light beam is incident and/or to one or more information storage layers, at least one of said adhesive layers being obtained by applying a curable liquid precursor of said adhesive with subsequent curing, said cover films exhibiting a vertical birefringence of less than 0.001 at 20 °C at least at the wavelength or wavelength spectrum, respectively, of said light beam.
The present invention furthermore relates to a preferred method of preparing an optical recording medium as described above comprising

(1) providing at least one base member having a surface on which the light beam is incident, said surface optionally comprising a structure of pits bearing an information storage layer,
(2) providing a multilayer film comprising in the order given a releasable protective film, a light-transmissive cover film the inner surface of which optionally comprising a structure of pits bearing an information storage layer, and, optionally one or more further light-transmissive cover films bonded to each other by means of one or more light-transmissive adhesive layers,
(3) applying a liquid curable precursor of the light-transmissive adhesive to at least one of surfaces of the base member and the exposed inner surface of multilayer film, and

(4) assembling the base member with the multilayer film and bonding them to each other by curing the liquid curable precursor of the light-transmissive adhesive.

Brief description of the figures

*Fig. 1a* schematically shows a specific embodiment of the optical recording media according to the present invention comprising a base member 1, the surface 2 of which where the light beam 6 is incident upon, comprises a structure of lands and grooves which forms part of an information storage layer 3, said optical storage medium further comprising a light-transmissive cover film 5 bonded to the information storage layer 3 by means of a light transmissive adhesive layer 4.

*Fig. 1b* schematically shows another specific embodiment of the optical recording media according to the present invention comprising a base member 1, the surface 2 of which comprises a structure of lands and grooves which forms part of a first information storage layer 3a, said optical storage medium further comprising a light-transmissive cover film 5 onto which the light beam 6 is incident upon, the surface 9 of which comprises a structure of lands and grooves which forms part of a second information storage layer 3b which is bonded to the information storage layer 3a by means of a light-transmissive adhesive layer 4.

It should be noted that the figures are schematic only and, in particular, not drawn to scale. In Fig. 1a the thickness of the base member 1 typically is up to one order of magnitude or more larger than the thickness of the light-transmissive cover film 5 whereas the depth of the grooves is typically in the range of 5 to 50 nm and thus negligible in comparison to the thickness of the base member 1.

Detailed description of the invention

Above and below, the terms "film" and "layer" are used interchangeably and refer to articles having an extension in the x-y-plane which is large (i. e. at least, e. g., 3 times or more) in comparison to its extension in z-direction (i. e. in comparison to its thickness).

The optical storage media of the present invention comprise at least one base member bearing on the side of the base on which the light is incident, one or more information storage layers which may be readable and/or recordable, at least one light-transmissive adhesive layer and at least one light-transmissive cover film whereby at least one of said adhesive layers is obtained by applying a liquid curable precursor of said adhesive with subsequent curing.

Fig. 1a shows as an example a schematic representation of a cross-sectional view of a specific embodiment of an optical storage medium according to the present invention comprising a base member 1 exhibiting on its major surface 2 on the side where the light 6 is incident upon, a structure of lands and grooves which forms part of the information storage layer 3. The information storage layer 3 is bonded to the light-transmissive cover film 5 by means of a light-transmissive adhesive layer 4 obtained by applying a liquid curable precursor of such adhesive with subsequent curing.

More complex constructions of optical storage media which are useful in the present invention, are described, for example, in EP 0,867,873 which is incorporated herein by reference. The optical storage media may comprise, for example, two or more information storage layers 3 arranged above each other on one or two, respectively, major surfaces of the substrate. Fig. 1b schematically shows a construction comprising two information storage layers 3a, 3b applied to the inner surface 2 of the base member and the inner surface 9 of the light-transmissive cover film, respectively.

The base member 1 may be of any shape but preferably is a disc exhibiting a centre hole useful for centering the assembled optical storage medium in a recording or playing station. The disc or annulus shaped substrates preferably have an outer diameter of about 10 to about 360 mm and an inner diameter of the centre hole of about 5 to about 35 mm, and the thickness preferably is between 0.3 and 3.0 mm and especially preferably between 0.5 and 1.5 mm. The substrate preferably comprises polymeric materials such as, for example, acrylic resins, polycarbonates, epoxy resins, cyclic olefin copolymers and polyolefins. Especially preferred are hard plastics such as polymethylmethacrylates, polycarbonates or thermally stable polyester cocarbonates.

The substrate may comprise on one or both, respectively, of its major surfaces a structure comprising concave portions (or grooves) and convex portions (or lands) which are usually collectively referred to as pits. Typical dimensions of pits including a relation between the wavelength of the light, the refractive index of the light-transmissive layer and the depth of a groove in order to minimize optical crosstalk between consecutive lands and grooves are disclosed, for example, in EP 0,874,362 or EP 0,867,873 which are incorporated herein by reference. The track pitch which is the distance between the centreline of adjacent physical tracks as measured in radial direction, preferably is 0.64 μm or less and more preferably 0.32 μm or less.

The structure of pits can be moulded into one or both, respectively, surfaces of the base member or members. This process, which is described in detail in EP 0,729,141, p. 4, Ins. 14 - 46, usually comprises a master disc-forming

step (as schematically shown in Fig. 4A - 4G of EP '141) and an injection moulding step (as schematically shown in Fig. 5A - 5B of EP '141); EP '141 is incorporated herein by reference. It is also possible, however, that a structure of pits is obtained in the light-transmissive cover film by passing the light-transmissive cover film which is heated to a temperature above its glass transition temperature between two rollers at least one of them exhibiting a patterned structure. This technique is shown schematically in Fig. 10 of EP 0,867,873 where the light-transmissive cover film is passed between a roll and a stamper. The light-transmissive cover film thus obtained can be bonded to the base member or to one or more other light-transmissive cover films optionally bearing a structure of pits, by means of a layer of a liquid, curable adhesive with subsequent curing so that optical storage media having a multiplicity of information storage layers can be obtained. A light-transmissive cover film exhibiting a structure of pits can also be obtained by the polymerization casting technique described below applying the coatable, polymerizable precursor of the light-transmissive cover film to an appropriately shaped substrate exhibiting a patterned structure, and subsequent polymerization and removal of the cured light-transmissive cover film from such substrate.

The construction of the information storage layer 3 depends on whether it is to allow for read out and/or recording.

If the optical storing layer is of ROM type, the information storage layer 3 may comprise the structure of pits bearing a reflective film of Al, Au or the like with a thickness of typically between 20 - 60 nm which can be obtained, for example, by sputtering.

Recordable optical storage media may be of phase-change type or magneto-optical type. According to EP 0,867,873 phase-change type information storage layers may be obtained by successively forming on the structure of pits a reflective film such as an Al film, a GeSbTe film and an $ZnS\text{-}SiO_2$ film. More complex phase-change type information storage layers are described, for example, in EP 0,874,362. Magneto-optical type information storage layers 3 comprise, for example, the structure of pits bearing a reflective film such as an Al film, a SiN film, a TbFeCo film and a SiN film in this order.

Information storage layers of write-once type can be obtained, for example, by applying a thin reflective film of Al, Au or other metals to the structure of pits which is then coated with a cyanin or phthalocyanine system organic pigment film.

The information storage layers described above are given by way of example only. The optical storage media according to the present invention can comprise other and/or modified constructions of information storage layers.

It was found by the present inventor that optical storage media with advantageous properties can be obtained by bonding such media with one or more light-transmissive adhesive layers at least one of such adhesive layers being obtained by applying the liquid curable precursor of such adhesive with subsequent curing. The further light-transmissive adhesive layers if present can be obtained by applying the liquid curable precursors of the respective adhesives with subsequent curing, or these may also be pressure-sensitive adhesive layers. While pressure-sensitive adhesive layers are generally stored between release liners which have to be removed and discarded prior to attaching or laminating the pressure-sensitive adhesive layer to other layers of the optical recording medium, the use of a liquid curable precursor of a light-transmissive adhesive does not require such additional waste-creating step. Pressure-sensitive adhesive layers typically have a minimum thickness of about 10 µm in order to avoid tearing and/or other mechanical deformations during handling whereas curable liquid precursors can be coated in thinner layers with a thickness of, for example, 5 µm or less. Thin adhesive layers may be used, for example, in optical transparent media comprising two or more light-transmissive cover films in order to minimize the transmission loss which is due to the presence of the adhesive layers and/or to minimize the overall variation of the thickness of the optical storage medium.

The specific embodiment of the optical storage medium schematically shown in Fig.1a comprises only one light-transmissive adhesive layer 4 bonding the light-transmissive cover film 5 to the information storage layer 3, wherein said adhesive layer was obtained by applying the liquid curable precursor of the adhesive with subsequent curing. Another optical storage media of the present invention comprises two or more information storage layers. The specific embodiment of the optical storage medium schematically shown in Fig. 1b also comprises only one light-transmissive adhesive layer 4 bonding base member 1 bearing a first information storage layer 3a to a second information storage layer 3b on a light-transmissive cover film 5 onto which the light beam 6 is incident upon, said adhesive layer having been obtained by applying the liquid curable precursor of the adhesive with subsequent curing.

Both the adhesive or adhesives obtained by curing of the respective liquid curable precursors and, if present, the pressure-sensitive adhesive layer or layers are required to be optically transparent or light-transmissive at the wavelength of the incident light beam 6 with which the information is read out from and/or recorded into the optical storage medium. Suitable light sources to generate light beam 6 comprise lasers having, for example, emission lines in the wavelength range of between 400 - 700 nm and preferably of between 600 - 660 nm for red lasers and 400 - 420 nm for blue lasers. It is also possible to use polychromatic light sources with appropriate monochromatic filters such as interference filters. The optical transparency or light-transmission of the pressure-sensitive adhesive at the wavelength of the incident light which can be measured, for example, according to ASTM D 1746, preferably is at least 80 % and more preferably at least 85 %.

The curable liquid precursor of the light-transmissive adhesive is preferably cured by exposing it to irradiation such as ultraviolet light (UV), gamma (γ) or e-beam irradiation, for example. The precursor of the light-transmissive adhesive contains at least one or more irradiation-curable compounds and one or more polymerization initiators.

Suitable irradiation-curable compounds include monomers, oligomers and pre-polymers having a double bond becoming reactive upon irradiation with, for example, an e-beam or UV light. Irradiation-curable compounds comprising at least one acrylic group

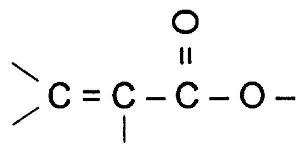

are preferred. Particularly preferred are irradiation-curable compounds comprising at least one (meth) acryloyl group

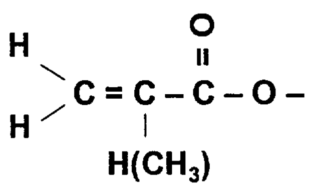

The irradiation-curable compounds suitable in the present invention are especially preferably selected from a group of compounds comprising optionally hydroxyl-, carboxyl- or carboxylate-modified alkyl or alkoxy acrylates, urethane acrylates, epoxy acrylates and acrylamides.

Especially preferred are furthermore irradiation-curable compounds comprising at least one N-vinyl group. Preferred N-vinyl containing irradiation-curable monomers which are suitable in the present invention include, for example, N-vinyl caprolactam, N-vinyl pyrrolidone and N-vinyl imidazole.

The polymerization initiator(s) suitable in the present invention include any conventional polymerization initiators which generate a radical upon UV, γ or e-beam irradiation. Exemplary polymerization initiators include benzoin etherphotoinitiators such as benzoin isopropylether and benzoin isobuthylether; benzophenone photoinitiators such as benzophenone, p-methoxybenzophenone, and p-bromobenzo-phenone; acetophenone photoinitiators such as benzylmethylketal, 2,2-diethoxyacetophenone, and 1,1-dichloroacephenone; thioxanthone photoinitiators such as 2-chlorothioxanthone; quinone photoinitiators such as anthoraquinone and phenanthoraquinone; and sulfide photoinitiators such as benzylsulphide, and tetramethylsulfide; and substituted alphaketols such as 2-methyl-2-hydroxypropiophenone. Examples of commercially available photoinitiators include Irgacure 819 and Darocur 1173 (both available from Ciba-Geigy Corp., Hawthorne, NY, USA), TPO (available from BASF, Parsipanny, NJ, USA) and Irgacure 651, whch is available from Ciba-Geigy Corporation and is believed to be 2,2-dimethoxy-1,2-diphenylethane-1-one. Also useful are copolymeric photoinitiators.

The polymerization initiator(s) is/are used in an amount effective to facilitate polymerization of the irradiation-curable compounds. The amount will vary depending on, e. g., the type of the polymerization initiators and/or its molecular weight. The polymerization initiators can be used in amounts from about 0.001 parts by weight to about 5 parts by weight based on the mass of the irradiation-curable compounds. Preferred amounts range from about 0.05 parts by weight to about 3 parts by weight.

The irradiation-curable compounds and polymerization initiator compounds mentioned above are exemplary only and other compounds can be used as well.

The curable liquid precursor of the light-transmissive adhesive may comprise further irradiation-reactive compounds such as crosslinking agents or chain transfer agents or irradiation-inert or non-reactive compounds and additives such as, for example, fillers such as hydrophobic or hydrophilic silica or antioxidants.

The concentration of crosslinking agents, if present, is preferably low and more preferably less than about 0.50 parts by weight based on the weight of the curable liquid precursor of the light-transmissive adhesive. Especially preferred are curable liquid precursors comprising no crosslinking agents.

Useful crosslinking agents include, for example, multifunctional acrylates such as those disclosed in US 4,379,201 or co-polymerizable aromatic lactone comonomers such as those disclosed in US 4,737,559.

The amount of irradiation-inert or non-reactive compounds or additives preferably is less than 25 parts by weight and more preferably less than 10 parts by weight with respect to the mass of the curable liquid precursor of the

light-transmissive adhesive.

The compounds of the curable liquid precursor of the light-transmissive adhesive are preferably selected so that the precursor has a viscosity of 10 - 10,000 mPa·s, more preferably of 50 - 8,000 mPa·s and especially preferably of 100 - 5,000 mPa·s at room temperature in the absence of a solvent. When the viscosity of the curable liquid precursor of the light-transmissive adhesive is less than about 10 mPa·s, such precursor may drip from the circumferential portion of the substrate after coating and before radiation irradiation, thereby rendering the thickness of the cured adhesive layer uneven. On the other hand, when the viscosity is more than about 10,000 mPa·s, unevenness of coating thickness may occur what may result in an uneven thickness of the cured adhesive layer.

The compounds of the irradiation-curable precursor of the light-transmissive adhesive are preferably selected so that the precursor or the resulting adhesive, respectively, are able to bond the substrate and/or the respective layer (s) in no more than one minute, and more preferably in 1 - 20 seconds.

In case the curable liquid precursor of the light-transmissive adhesive and, after curing, the cured adhesive are in contact, for example, with a metallic reflection layer, the adhesive and its precursor need to be selected so that corrosion can be suppressed or avoided.

Curable liquid precursors of light-transmissive adhesives which are suitable for use in the optical storage media according to the present invention, are disclosed in prior art. The co-pending patent application entitled "Adhesive composition and optical disc using the same" which was filed by the present applicant as JP 160,083/99 on June 7, 1999, discloses an irradiation-curable precursor of a light-transmissive adhesive comprising (1) a urethane acrylate having a poly(tetramethylene glycol) skeleton, (2) an acrylic ester having a hydroxyl group in its molecule and (3) a photoinitiator. The co-pending patent application entitled "Polycarbonate articles and adhesive compositions therefor" filed by the present applicant as U.S. S.N. 09/324,148 on June 2, 1999, discloses a liquid curable precursor of a light-transmissive adhesive comprising an N-vinyl containing a monomer and an acrylic acid ester monomer of a non-tertiary alcohol having an alkyl group with 4 - 20 C atoms. The curable precursors of a light-transmissive adhesive disclosed in U.S. S.N. 09/324,148 and in JP 160,083/99 exhibit advantageous adhesive curing characteristics, a high transparency of the cured adhesive to laser light, a favourable corrosion behaviour towards metallic films and a viscosity in the desirable viscosity range of between 10 - 10,000 mPa·s and are therefore especially preferred for use in the optical storage media according to the present invention. Another curable precursor of a light-transmissive adhesive film which is useful in the present invention is disclosed in US 5,445,855.

The optical storage media of the present invention comprise one or more light-transmissive cover films which each optionally exhibit on one or both of their major surfaces a structure of pits. It was found by the present inventors that optical storage media with a reproducably high transmittance in particular with respect to linearly polarized light can be obtained by using in such storage media one or more light-transmissive cover films being essentially optically isotropic and preferably having a vertical birefringence of less than 0.001, more preferably of less than $8 \times 10^{-4}$ and especially preferably of less than $6.5 \times 10^{-4}$ at a temperature of 20 °C and at least at the wavelength or wavelength spectrum, respectively, of the light beam 6 used for recording and/or reading out information.

Light transmissive polymeric films which are essentially optically isotropic and exhibit, in particular, a low value of vertical birefringence have been described in the prior art but their importance for providing optical storage media with high performance, excellent optical properties and, in particular, with a high transmittance towards linearly polarized light has not been recognized so far.

For a given sheet of a polymeric film having a plane extending in x- and y-directions and a thickness d in the z-direction, the vertical birefringence is the difference between the refractive index perpendicular to the plane of the film, e.g. in the z-direction, and the average of the refractive indices in the two principal directions parallel to the plane of the film, e. g., the plane containing the x- and y-directions. The vertical birefringence is measured applying the method of measurement as described below, at a temperature of 20 °C preferably using a laser light source which can also be used for recording and/or reading out, respectively, information into and from, respectively, the optical storage media. Laser light sources which can be used include, for example, those having emission lines in the wavelength range of between 400 - 700 nm. It is also possible to use polychromatic light sources using a monochromatic filter.

The light-transmissive cover film or films, respectively, used in the optical storage media of the present invention preferably furthermore exhibit an in-plane retardation of less than ± 30 nm, more preferably of less than ± 25 nm and especially preferably of less than ± 15 nm at a temperature of 20 °C and the wavelength or wavelength spectrum, respectively, of the light beam used for recording and/or reading out information. The in-plane retardation is measured applying the method of measurement as described below using DVD tester "Prometheus MT 136" commercially available from Dr. Schenk GmbH, Martinsried, Germany. The in-plane birefringence is obtained from the in-plane retardation value by dividing the latter by the thickness of the light-transmissive cover film.

It is disclosed in EP 99 107 975.7 that essentially optically isotropic light-transmissive cover films with the required low values of vertical birefringence and, optionally, in-plane birefringence can be obtained by using, for example, solvent-casting and, in particular, polymerization casting techniques. It is disclosed in the co-pending European patent application entitled "Optical storage medium" filed by the present applicant at the EPO on October 24, 2000

that light-transmissive cover films can also be obtained by extrusion techniques.

Preparation of the light-transmissive cover films by solvent-casting includes dissolving of the polymer in a solvent, casting of the solution onto a smooth substrate or microstructured surface, respectively, in case an information storage layer is to be included into the light-transmissive cover film, and solidifying the polymer by evaporization of the solvent. Preferred polymers include, for example, polycarbonate, cellulose triacetate and polyolefin-based polymers such as polydicyclopentadiene or a norbornene/dicyclopentadiene/methyl methacrylate terpolymer. Suitable solvents include, for example dichloromethane, dioxolane, cyclohexanone, tetrahydrofuran, dioxane and combinations thereof.

Preparation of the light-transmissive cover film by polymerization-casting includes preparation of a coatable, syrupy precursor which typically comprises the solution of a partially polymerized, curable precursor of the polymer in excess monomer or oligomer. This solution is then cast on a smooth substrate with subsequent polymerization to provide the light-transmissive cover film. This technique allows for the formation of homopolymers or copolymers. It is also possible that one or more polymers are blended into the polymerizable precursor in order to adjust its viscosity and/or modify the properties of the resulting light-transmissive cover film. It is also possible that the polymerizable precursor comprises one or more solvents in order to adjust its viscosity and coatability but the use of solvent-free polymerizable precursors is preferred. The polymerizable precursor preferably comprises at least one acrylic-functional monomer which, when polymerized, displays a glass transition temperature of at least 10 °C, preferably from about 10 °C to about 140 °C, more preferably from about 20 °C to about 110 °C and especially preferably from about 40 °C to about 100 °C, and/or is not friable.

The light-transmissive cover film obtained by polymerization of the polymerizable precursor preferably is stiff or ductile. As used herein, the term "stiff" means stretch resistant, creep resistant and dimensionally stable. More particularly, the light-transmissive cover film preferably has a tensile modulus at room temperature of more than 1,380 MPa (200 kilopounds per square inch), more preferably of more than 2,070 MPa (300 kpsi) and most preferably of more than 2,760 MPa (400 kpsi).

Tensile modulus of the light-transmissive cover film is determined according to ASTM Test Method D-822-88 using a 10.2 cm (4 inch) gauge length and a separation rate of 5.1 cm/min (2 inches/min).

As used herein, the term "ductile light-transmissive cover film" refers to films having a tensile modulus of less than 1,380 MPa (=200 kpsi) and a tensile elongation at room temperature of greater than 50%, preferably greater than 150%. Tensile modulus and tensile elongation are measured in accordance with ASTM Test Method D-882-88 using a gauge length of 10.2 cm and a separation rate of 12.7 cm/min (5 inches/min). "Tensile elongation" as used herein refers to the elongation at break of the ductile material as measured during the referenced tensile test procedure.

Light-transmissive cover films with the specified values of stiffness or ductility, respectively, are preferred. The tensile test procedures described above are only used, however, to check the mechanical properties of test samples of the light-transmissive cover film. Such test samples are not used in the optical storage media of the present invention. The light-transmissive cover film to be used in the optical storage media of the present invention has to be handled as stress-free as possible in order not to impart optical anisotropy to such film. Therefore, the light-transmissive cover film useful in the present invention should not be subjected to stretching.

The monomer component of the polymerizable precursor of the light-transmissive cover film is preferably selected so that the resulting light-transmissive cover film is non-tacky at room temperature. Tacky light-transmissive cover films may, however, also be useful, for example, if the optical recording medium and, in particular, the DVR according to the present invention is assembled into a cartridge. Monomers which are useful in the present invention include alkyl acrylates the alkyl groups of which have an average of 2 - 24 atoms. The term average of 2 - 24 atoms means that the average number of carbon (C) atoms of the alkyl acrylate compounds is between 4 - 24, preferably between 4 - 12 C atoms and especially preferably between 4 -10 C atoms. Useful alkyl acrylates (i.e., acrylic acid alkyl ester monomers) include linear or branched monofunctional unsaturated acrylates or methacrylates of non-tertiary alkyl alcohols, the alkyl groups of which have from 2 to 24 and, in particular, from 2 to 20 carbon atoms. Examples of these lower alkyl acrylates used in the invention include but are not limited to, methyl acrylate, ethyl acrylate, propyl acrylate, n-butyl acrylate, isobutyl acrylate, hexyl acrylate, 2-ethylhexyl acrylate, isooctyl acrylate, n-octyl acrylate, n-octyl methacrylate, 2-methylbutyl acrylate, isononyl acrylate, n-nonyl acrylate, isoamylacrylate, n-decyl acrylate, isodecyl acrylate, isodecyl methacrylate, isobornyl acrylate, 4-methyl-2-pentyl acrylate, dodecyl acrylate, hexadecyl acrylate, octadecyl acrylate and eicosyl acrylate. Preferred lower acrylate and methacrylate esters include isooctyl acrylate, n-butyl acrylate, 2ethylhexyl acrylate, isononyl acrylate and dodecyl acrylate. The polymerizable precursor of the light-transmissive cover film preferably contains up to 5 and, in particular, 1 - 4 alkyl acrylates. The average number of carbon atoms in the alkyl groups of the alkyl acrylates as defined above, preferably is between 2 - 20, preferably between 2 - 12 and very particularly between 2 - 6. Blends of different alkyl acrylates may also be used.

The polymerizable precursor of the light-transmissive cover film can furthermore contain alkyl esters of unsaturated aliphatic carboxylic acids other than acrylic acid such as, for example, alkyl maleates and alkyl fumarates (based, respectively, on maleic and fumaric acid). In this regard, dibutyl maleate, dioctyl maleate, dibutyl fumarate and dioctyl fumarate, are preferred. The amount of ester compounds of unsaturated aliphatic carboxylic acids other than

acrylic acid preferably is not too high and preferably does not exceed 25 wt. % with respect to the mass of the alkyl acrylate component.

The polymerizable precursor of the light-transmissive cover film can furthermore contain one or more moderately polar and/or strongly polar monomers. Polarity (i.e., hydrogen-bonding ability) is frequently described by the use of terms such as 'strongly', 'moderately', and 'poorly'. References describing these and other solubility terms include 'Solvents', Paint Testing Manual, 3rd ed., G.G. Seward, Ed., American Society for Testing and Materials, Philadelphia, Pennsylvania, and 'A Three-Dimensional Approach to Solubility', Journal of Paint Technology, Vol. 38, No. 496, pp. 269- 280. Examples for strongly polar monomers are acrylic acid, methacrylic acid and acrylamides while N-vinyl lactams, such as, for example, N-vinyl pyrrolidone and N-vinyl caprolactam, acrylonitrile and dimethyl amino-propyl methacrylate are typical examples of moderately polar monomers. Examples for poorly polar monomers include, for example, iso-bornyl acrylate, vinyl acetate, N-octyl acrylamide, t-butyl acrylate, methyl acrylate, methylmethacrylate or styrene.

The polymerizable precursor can furthermore include glycerol diacrylate, glycerol triacrylate, ethyleneglycol diacrylate, diethyleneglycol diacrylate, triethyleneglycol dimethacrylate, 1,3-propanediol diacrylate, 1,3-propanediol dimethacrylate, trimethanol triacrylate, 1,2,4-butanetriol trimethylacrylate, 1,4-cyclohexanediol diacrylate, pentaerythritol triacrylate, pentaerythritol tetraacrylate, pentaerythritol tetramethacrylate, sorbitol hexacrylate, bis[1-(2-acryloxy)] p-ethoxyphenyl dimethylmethane, bis[1-(3-acryloxy-2-hydroxy)]-p-propoxyphenyl-dimethylmethane, tris-hydroxyethyl isocyanurate trimethacrylate, bis-acrylates and bis-methacrylates of polyethylene glycols of a molecular weight of 200-500 and acrylated oligomers such as those described in US 4,642,126.

The polymerizable precursor of the polymer of the light-transmissive cover film may also include film forming materials compatible with the monomer component. Such film-forming materials preferably include polymers reactive with the monomer component, e.g., acrylic functional copolyesters, acrylic functional polyurethane-acrylate copolymers, dendrimers or acrylate-functional macromers, and also non-reactive polymers which are preferably selected so that they are soluble both in the polymerizable precursor and in the cured precursor, i.e. in the light-transmissive cover film. Non-reactive polymers which when blended with the precursor of the light-transmissive cover film result in a polymer with a negative $\chi$("chi") value are preferred; such non-reactive additives may be selected, for example, from the group of polymers comprising polyalphaolefins, thermoplastic block copolymers, non-reactive acrylic polymers and polyphenylene ethers.

Preferred monomers used in the polymerizable precursor include, for example, (methyl)methacrylate, (methyl) ethylacrylate, (methyl)propylacrylate, lower amounts of (methyl) ($C_4$ - $C_8$ alkyl) acrylates, acrylonitrile, methacrylamide, alkyl substituted methacrylamide such as N,N,-dimethylacrylamide, octylacrylamide, N-vinylpyrrolidone, N-vinylcaprolactam or styrene.

The degree of prepolymerization of the polymerizable precursor is preferably chosen as to provide an easily coatable precursor having a viscosity of, for example, between 0.3 and 200 Pa·s at room temperature.

The polymerizable precursor of the polymer of the light-transmissive cover film preferably comprises a monomer component selected from the group comprising (methyl)methacrylate, (methyl)ethylacrylate, (methyl)propylacrylate, lower amounts of (methyl) ($C_4$ - $C_8$ alkyl) acrylates, acrylonitrile, styrene alkyl acrylates, methacrylamides and alkyl substituted methacrylamides, one or more polymerization initiators and optionally one or more vinyl monomers having one or more unsaturated double bonds copolymerizable with the monomer(s) of the polymerizable precursor.

The thickness of the light-transmissive cover film or films, respectively, preferably is between 10 and 200 µm, more preferably between 20 and 150 µm and especially preferably between 40 and 120 µm. In more complicated constructions of the optical storage medium of the present invention comprising two or more light-transmissive cover films, the thickness of each cover layer preferaby is between 10 and 100 µm and more preferably between 20 and 90 µm.

The maximum thickness of the sum of the thicknesses of the light-transmissive cover film or films and the pressure-sensitive adhesive layer or layers of the optical storage media of the present invention can be estimated according to EP 0,867,873 and JP 3-225,650 by using a relationship established in JP 3-225,650 for CDs, between such maximum thickness, the numerical aperture of the optical head device of the optical disc recording and/or reproducing apparatus, the wavelength of the light source utilized and the skew margin. When using a laser light source with a wavelength of approximately 0.65 µm, EP 0,867,873 suggests for the sum of the thicknesses of the light-transmissive cover film or films and the pressure-sensitive adhesive layer or layers a value of 288 µm or less whereas for a blue light laser with a wavelength of 0.4 µm a value of 177 µm or less is disclosed.

In both the solvent-casting and the polymerization casting technique of preparing the light-transmissive cover film(s), the thickness of the cast layer is preferably carefully controlled in order to allow for the preparation of very uniform light-transmissive cover films. It was found that the variation of the thickness of the light-transmissive cover film preferably is not more than ± 3 µm and more preferably not more than ± 2 µm as measured across an arbitrarily selected cross-section of the optical recording medium over its entire extension using the method of measurement described in the test section below.

It was found that the preparation of very flat, uniform precision caliper light-transmissive cover films can preferably be obtained by using the die coating method and the precision coating die described in WO 95/29,764 and WO 95/29,765. This method can be used, for example, to coat partially prepolymerized, syrupy precursors of the polymer of the light-transmissive cover film or solutions of such polymer, respectively, onto a moving belt or drum or a release liner with subsequent curing of the precursor and/or drying of the solution, respectively. The light-transmissive cover film thus obtained may be directly transferred after curing or drying, respectively, from the moving belt onto the exposed pressure-sensitive adhesive layer. When using a moving belt or a release liner with an essentially flat and smooth surface with a surface roughness $R_z$ as defined below of less than 2 μm, very homogenous light-transmissive cover films with a thickness tolerance of about ± 3 μm or less, preferably of about ± 2 μm or less can be obtained. Suitable belts or drums, respectively, with the required smooth surfaces comprise, for example, highly polished stainless steel surfaces.

It was found by the present inventor that the solvent casting technique provides light-transmissive cover films which are essentially optically isotropic and exhibit, in particular, a low value of vertical birefringence which meets the requirements of the present invention. The vertical birefringence may vary to some degree between different casting runs but it was found by the present inventor that it is possible to obtain light-transmissive cover films with the required vertical birefringence of less than 0.001 at 20 °C at least at the wavelength or wavelength spectrum, respectively, of the incident light beam 6, with a limited number of runs and without undue experimentation.

Generally, the casting process has to be applied so that any stress introduced into the solvent-casted film is minimized. It was found by the present inventor that the light-transmissive cover film is preferably removed from the substrate where it has been solvent-casted upon, with a residual solvent content of, for example, 10 -25% by wt. and more preferably of 12.5 - 17.5 % by wt.. The light-transmissive cover film is then further dried as a free-standing, unsupported film by passing, for example, through a forced air oven.

It was furthermore found that the optical isotropic character of the light-transmissive cover film can be increased and, in particular, its vertical birefringence can be decreased by casting a solution of a suitable polymer and/or a polymerizable precursor on a moving belt or a release liner having a low surface energy of preferably less than about 35 dynes/cm as is disclosed in EP 0,380,028. Suitable low surface energy materials comprise, for example, poly (tetrafluoroethylene), poly(vinylidene fluoride), poly(trifluorochloroethylene) and polyethylene with polyethylene, poly (tetrafluoroethylene) and poly(vinylidene fluoride) being especially preferred.

It was furthermore found that the optical isotropic character of the light-transmissive cover film can be increased and, in particular, its vertical birefringence can be decreased by increasing the thickness of such film. Therefore, in a specific construction of an optical storage medium according to the present invention with a given total thickness of light-transmissive cover film or films and light-transmissive adhesive layer or layers, respectively, the vertical birefringence of the light-transmissive cover film can be decreased by increasing the thickness of the light-transmissive cover film or films while correspondingly decreasing the thickness of the light-transmissive adhesive layer or layers.

It was furthermore found by the present inventor that the optical isotropic character of the light-transmissive cover films can be increased and, in particular, its vertical birefringence can be decreased by decreasing the amount of components in the polymer composition which tend to impart optical anisotropy. It was, for example, found that the optical anisotropic character of polymers, obtained by solvent casting of polymer formulations comprising a polycarbonate polymer and varying amounts of 1,1-bis(4-hydroxyphenyl)-3,3,5-trimethyl cyclohexane (TCM), was decreased with decreasing amounts of TCM.

It was furthermore found by the present inventor that light-transmissive cover films with low or very low values of vertical birefringence can be obtained by the polymerization-casting technique. This technique tends to provide light-transmissive cover films with a higher degree of optical isotropy and, in particular, with values of the vertical birefringence which are as low or lower as those of solvent-cast films. The polymerization-casting technique is preferred.

For optical storage media according to the present invention a low value of the vertical birefringence is essential because of the large value of the numerical aperture of the focussed impinging light beam (6). The optical storage media of the present invention furthermore preferably exhibit a low value of in-plane retardation or of the in-plane birefringence, respectively. Light-transmissive cover films obtained by the solvent-casting or the polymerization-casting technique, respectively, preferably exhibit a value of the in-plane retardation of less than ± 30 nm and, more preferably of less than ± 25 nm and especially preferably of less than ± 15 nm at 20 °C at least at the wavelength or the wavelength spectrum, respectively, of the incident light beam 6; these values correspond for a typical value of the light-transmissive cover film of, for example, 75 microns to values of the in-plane birefringence of 0.0004, 0.00033 and 0.0002, respectively.

Based on these findings, light-transmissive cover films which are essentially optically isotropic and, in particular, exhibit the required value of the vertical birefringence of less than 0.001 and, optionally, the required value of the in-plane birefringence of less than ± 30 nm in each case at 20°C and at least at the wavelength or wavelength spectrum, respectively, of the incident light beam 6, can reproducably be obtained. Light-transmissive polymer films with the required low values of vertical birefringency and, optionally, in-plane retardation are also available commercially as can be taken from the Example section below.

It was found that it is desirable to laminate a releasable protective film to at least one major surface of the light-transmissive cover film in order to protect the surface of the light-transmissive cover film during handling and mounting of the optical recording media.

A wide variety of polymer films optionally bearing a pressure-sensitive adhesive layer can be used as releasable protective film. Useful polymer films which can be used in conjunction with a pressure-sensitive adhesive layer comprise, for example, polyolefin films including homopolymers such as polyethylene or polypropylene films, copolymers such as ethylene/propylene copolymers and mixtures of homopolymers or copolymers such as mixtures of polyethylene and polypropylene, polyethylene terephthalate films or polyurethane films like, for example, extendable elastomeric polyurethanes of the polyetherurethane or polyesterurethane type. It is also possible to use laminates of at least two polymer films the lower exposed film of which being bonded to the light-transmissive cover film 5, exhibiting self-adhering properties. Suitable examples of polymers with self-adhering properties included EVA films (polyethylenevinylacetate) having a high vinyl acetate content of, for example about 5 - 20 wt. % with respect to the mass of the EVA polymer. Such laminates can be used as releasable protective films without a pressure-sensitive adhesive layer.

The pressure-sensitive adhesive if present is preferably selected so that it can be easily removed from the light-transmissive cover film without leaving behind any residual adhesive. It was found by the present inventors that the pressure-sensitive adhesive is preferably selected so that the 90° peel adhesion from a polycarbonate substrate as measured according to PSTC method PSTC-3 is not more than 1 N/2.54 cm, preferably not more than 75 cN/2.54 cm and especially preferably less than 50 cN/2.54 cm. Suitable acrylate based removable adhesives which exhibit a low peel adhesion strength and a high cohesive strength which are useful for the preparation of releasable protective films are described, for example, in US 4,166,152 incorporated herein by reference. Releasable protective films which are useful in the present invention are available as protective tape products from 3M; a suitable example is 3M Protective Tape # 2104.

In a preferred method of preparing an optical recording medium according to Fig. 1a, a disc-shaped member 1 having an outer circumference and a center hole (not shown in Fig. 1a) and bearing an information storage layer 3, is provided. The base member 1 is applied through its center hole to a rotatable support having a holding pin securing said base member to the rotatable support. Then the liquid curable precursor of the light-transmissive adhesive film is dosed onto the information storage layer 3 of the base member. Since the adhesive will be distributed at a later step in the assembly procedure by rotating the base member, i.e. by the application of centrifugal forces, it was found to be advantageous to dose the liquid curable precursor to the information storage layer 3 of the base member close to the circumference of the center hole. It is preferred to apply the liquid precursor in the form of a ring around the circumference of the center hole. The precursor of the liquid adhesive can also be applied, for example, as a single dot or in other geometries and/or in larger distances from the circumference of the center hole but it was found by the present inventor that the homogenity of the thickness of the layer of the curable liquid precursor can be increased when applying such precursor in the form of a ring relatively close to the outer circumference of the center hole.

In the next step, a die-cut of the light-transmissive cover film 5 exhibiting an outer circumference and a center hole having dimensions corresponding to those of the base member 1, is prepared and placed onto the information storage layer 3 of the base member 1. The die-cut of the light-transmissive cover film is secured through its center hole to the holding pin of the rotatable support.

In the next step, the disc member 1 and the ligh-transmissive cover film 5 attached to it are rotated to spin out the curable liquid precursor of the light-transmissive adhesive between the storage layer 3 and the cover film 5. The variation of the thickness of the layer of the liquid curable precursor can be optimized, in particular, by selecting an appropriate maximum rotation frequency of the rotatable support and also by varying the rotation time and the rotation speed-time profile applied to ramped up the rotation frequency to and down from, respectively, its maximum value. The person skilled in the art can easily determine appropriate parameters for a given disc construction and geometry without undue experimentation. The maximum rotation frequency typically is between 500 and 5,000 rpm.

In the next step, the liquid curable precursor of the light-transmissve adhesive is irradiated preferably through the light-transmissive cover film 5 in order to effect curing. Curing by UV-irradiation is preferred using UV lamps generating light in the wavelength range from about 250 nm to about 450 nm, more preferably from about 300 nm to about 400 nm.

In a final step, the holding pin of the rotatable support is retracted to release the assembled optical storage medium according to the present invention.

In the above method of preparing an optical storage medium it is not required to apply the light-transmissive cover film 5 under vacuum because any air bubbles formed in the layer of the curable liquid precursor of the light-transmissive adhesive are expelled during the subsequent spinning step. The variation of the thickness of the optical storage medium introduced by each light-transmissive adhesive layer 4 obtained by applying a liquid curable precursor of said adhesive with subsequent curing is typically not more than about ± 2 microns and more preferably not more than about ± 1 micron as measured across an arbitrarily selected cross-section of the optical storage medium over its entire extension. The thickness of the cured light-transmissive adhesive layer obtained by applying a liquid curable

precursor of said adhesive with subsequent curing, is typically from 0.5 - 20 μm, more preferably from 2 - 10 μm and especially preferably from 2 - 8 μm.

Therefore, the method of preparing an optical storage medium described in some detail above is preferred.

In an alternative method of preparing an optical storage medium according to Fig. 1a, the curable liquid precursor of the light-transmissive adhesive 4 is applied to the information storage layer 3 of the base member 1 by spin coating, knife coating or spray-coating and cured by, e. g., UV irradiation before the die-cut of the light-transmissive cover film 5 is applied. In this case, the curable liquid precursor of the light-transmissive adhesive 4 is preferably selected so that the cured adhesive is a pressure-sensitive adhesive in order to ensure a sufficient bonding between the light-transmissive cover film 5 and the information storage layer 3 of the base member. This method requires, however, that the light-transmissive cover film 5 is applied to the base member under vacuum in order to avoid incorporation of air bubbles. In case of a cured adhesive layer with pressure-sensitive adhesive properties it is also preferred to apply the light-transmissive adhesive layer 4 as a separately prepared layer or film as is disclosed in co-pending European patent application EP 99 107 957.7.

The methods as described above are only exemplary and restrict by no means the scope of the present invention.

Test methods

*Thickness and flatness measurements*

The thickness and thickness variation of the light-transmissive cover films and adhesive layers were measured using a DVD tester commercially available as ETA-DVD 80 from STEAG HamaTech AG, Sternenfeld, Germany. The ETA-DVD tester had a maximum resolution in radial direction of 0.1 mm and in tangential direction of 0.1 mm, the thickness resolution is 0.1 μm within the range of 25 - 120 μm. The ETA-DVD tester consists of a turntable onto which the disc is mounted, a laser/sensor system and the measuring computer unit.

Samples of the light-transmissive cover films to be evaluated were mounted with double-coated adhesive tape over cut-out sections of a CD disc blank which acted as a sample holder. Measurements were made at a radius of 37.5 mm from the disc center. Three hundred (300) values per circle were measured. This reflects the maximum resolution which could be measured using this instrument.

Samples of adhesive layers were evaluated as components of completed disc constructions.

*Vertical birefringence of light-transmissive cover film*

Equipment used:

Microscope:

A Leitz Ortholux II Pol microscope purchased from Ernst Leitz Wetzlar GmbH, Wetzlar, Germany (now Leica Mikroskopie und Systeme GmbH, Wetzlar, Germany), was used. This microscope was equipped with a 40X/0.85NA strain free objective and a full-wave compensating plate. The microscope was also equipped with a Bertrand lens for conoscopic viewing.

Polarization Analyzer:

RPA2000 Polarization Analyzer equipped with the RW or rotating waveplate option and a 435 nm interference filter. The instrument is manufactured by Instrument Systems GmbH, Neumarkter Str. 83, 81673 Munich, Germany

Procedure of measurement:

The procedure consists of 3 distinct steps:

1) determination of the orientation of the minimum and maximum refractive index directions in the plane of the light-transmissive cover film.
2) measurement of the Mueller matrix for light propagating through the light-transmissive cover film along a path 45 degrees to the plane of light-transmissive cover film.
3) calculation of the vertical birefringence from the Mueller matrix .

ad 1)

A sample of the light-transmissive cover film is placed on the microscope stage and brought into good focus using the 40X objective. By using conoscopic viewing it is verified that the light-transmissive cover film has 3 principal refractive indices: 2 very nearly equal refractive indices which are perpendicular to one another but in the plane of the film and a third refractive index perpendicular to the plane of the film. This can be confirmed by observing that the interference figure remains centered as the stage is rotated. If the interference figure remains well centered then the directions of the principal refractive indices in the plane of the film are determined.

ad 2)

The RPA2000 Polarization Analyzer is set up so that the plane of the rotating table is perpendicular to the light path between the polarization state generator and the polarization state analyzer. The sample of the light-transmissive cover film is placed on a holder that was constructed to ensure that the light beam used to analyze the film passes through the film at 45 degrees to the plane of the light-transmissive cover film. Additionally, the high refractive index direction in the plane of the light-transmissive cover film is oriented to be perpendicular to the light beam. The sample holder is then placed on the rotating table of the RPA2000 Polarization Anaylzer. The Mueller matrix is then measured for the film in this specific orientation. If the non-diagonal elements of the matrix are significantly different from zero then the table is rotated to minimize these terms and the Mueller matrix is remeasured.

Ad 3)

The retardation of the light as it travels through the light-transmissive cover film at 45 degrees is calculated based on the equations given in "Polarized Light: fundamentals and applications", Edward Collet, M. Dekker, New York 1993, p. 581. Then the path length of the light through the light-transmissive cover film is obtained from the following equation:

$$\text{Path length} = \text{thickness of the film} / (\cos(\arcsin(45/\text{nominal refractive index})))$$

using the average in-plane refractive index as the nominal refractive index.

The birefringence at 45 degrees is the retardation at 45 degrees divided by the path length. Because the in-plane refractive index is known, the refractive index at 45 degrees can be calculated.

The final calculation uses the equation for the length of a radial line in an ellipse to calculate the refractive index perpendicular to the plane of the film. The long axis of the ellipse is the refractive index in the plane of the film and the length of the radial line at 45 degrees is the refractive index calculated above. This allows the calculation of the unknown short axis of the ellipse or the refractive index perpendicular to the plane of the film.

The vertical birefringence is obtained as the difference between the in-plane refractive index and the refractive index perpendicular to the plane of the light-transmissive cover film.

The values of vertical birefringence were measured at 20 °C and at a wavelength of 435 nm.

*In-plane retardation of light-transmissive cover film*

Sample preparation: samples of the light-transmissive cover films to be evaluated were mounted with double-coated adhesive tape over cut-out sections of a CD disc blank which acted as a sample holder.

Measurements were made on commercial equipment suited to evaluating properties of optical recording media, available from Dr. Schenk GmbH, Martinsried, Germany, as Model "Prometheus MT 136". The measurement mode "relative birefringence" was selected.

A graph was generated giving relative birefringence (T) in nm (Y-axis) vs. measurement angle in degrees (X-axis). The resulting graph showed sections where the instrument was observing the sample holder. These portions were disregarded. The remaining signal appeared in shapes varying from near flat to a sinusoidal wave form.

Two measurements were made in each sample section, as 35 mm and 40 mm radius from the center of the disc, respectively. Another measurement was made at 64 mm which corresponds to a position outside the area of the disc where only air was observed. This served as a reference or control number.

The minimum and maximum values from the curve were taken and then averaged. Both the average and the deviation from that average are recorded.

Because the disc rotates, information is generated on the light-transmissive cover film's properties in several directions. One can observe the cross-web and down-web directions of the light-transmissive cover films and the

influence on the birefringence.

*Micro-roughness and wave-like roughness of the light-transmissive cover film*

Samples of the light-transmissive cover films were held in a circular film-tensioning device designed to hold the film flat during measurement. Micro-roughness was then measured on the surface of the light-transmissive cover films using a UBM Laser Profilometer Mikrofocus Compact available from UBM Messtechnik GmbH, Ettlingen, Germany.

A distance of 10 mm of film surface was evaluated with 1000 data points per mm for a total of 10,000 data points. A graph was generated showing roughness in microns vs. distance over the 10 mm range (0 - 10 mm). The micro-roughness was estimated visually by measuring the width of the generated line. A wave-like function could be observed over a distance of several mm as well. The difference between the trough and the crest of a wave was measured and recorded.

Materials employed in the Examples

1. Light Transmissive Cover Films

1.1 Light Transmissive Cover Film A

APEC 9331 (Bayer AG), a polycarbonate polymer comprising 90% by weight bisphenol A and 10% by weight 1,1-bis(4-hydroxyphenyl)-3,3,5-trimethyl cyclohexane (TMC), was dissolved in methylene chloride and cast onto a smooth stainless steel belt and then dried down to 15% residual solvent. The film was removed from the belt and passed through a forced air oven (ca. 80-100° C) until the residual solvent in the film was less than 1% by weight.

The resulting light-transmissive cover film had a thickness of 77 microns. The film was obtained from Lofo High Tech Film GmbH, Weil am Rhein, Germany.

The light-transmissive cover film was evaluated according to the Test methods given above and its properties summarized in Table 1 below.

The light-transmissive cover film prepared above was then laminated to a releasable protective film designed to protect the light-transmissive cover film from scratches and contamination with dust during subsequent manufacture of digital versatile discs. The releasable protective film was multilayer polyolefin-based sheet, having a thickness of 50 microns, available as GH- X 173 from Bischof and Klein GmbH, Lengerich, Germany. Lamination was performed using a film laminator at 23° C.

1.2. Light Transmissive Cover Film B

A polyolefin-based transparent film was obtained from Lofo High Tech Film GmbH, Weil am Rhein, Germany, as TRANSPHAN™ OG 652GL. The film had a thickness of 98 microns and comprised a terpolymer of norbornene, dicyclopentadiene and methyl methacrylate. Such film was evaluated as a light-transmissive cover film for use in the present invention.

Vertical birefringence, thickness, transmission and roughness of the films were measured. Film properties are summarized in Table 1.

1.3. Light Transmissive Cover Film C

A isobornyl acrylate (IBOA) and GENOMER™ 1112 were combined in the amounts of 50 wt. % each with 0.05 parts by weight of photoinitiator based on 100 parts by weight monomer. Isobornyl acrylate (IBOA) is available from Osaka Chemical Company, Osaka, in Japan. GENOMER™ 1112, a monofunctional aliphatic urethane acrylate, is available from Rahn AG, Zuerich, Switzerland. IRGACURE™ 651 is 2,2-dimethoxy-1,2-diphenylethane-1-one and is available from Ciba-Geigy, Lautertal, Germany. The three-component mixture was purged with nitrogen and then partially polymerized using UV light until the mixture had a viscosity of ca. 1500 mPa.s.

A second portion of IRGACURE™ 651 photoinitiator was added to the syrup in the amount of 0.10 parts by weight based on 100 parts by weight of syrup. The partially polymerized syrup was first degassed and then coated between two transparent siliconized polyester films having a thickness of ca. 50 microns. The coating was performed using a knife coater and the syrup layer had a thickness of ca. 75 microns.

The construction thus prepared was passed under medium pressure UV lamps having about 90 % of the emissions between 300 and 400 nm, with a peak emission at 351 nm. The construction was irradiated with a total energy 103 mJ/cm$^2$. The polymerization was essentially completed during this radiation curing process.

The film was evaluated as a light-transmissive cover film for use in the present invention. Vertical birefringence, roughness and transmission were measured. The results are summarized in Table 1.

Table 1:

| *Properties of light transmissive cover films employed in the examples* | | | | | |
|---|---|---|---|---|---|
| Film | Film thickness, microns +/- | Vert. biref. | In-plane retardation, nm, +/- | Micro-roughness, nm | Wave-like roughness, nm |
| A | 77.0 +/- 0.6 | 0.000660 | -1, +/- 9 | 60 | 800 |
| B | 97.6 +/- 1.5 | 0.000383 | -2 +/-8 | 40 | 400 |
| C | | 0.000044 | ** | 300 | -- |

** below the measurement threshold of the instrument

2. Radiation curable liquid adhesive precursors employed in the Examples

2.1. Liquid Adhesive Precursor S

A mixture of 80 parts by weight poly (tetramethylene glycol)-based urethane acrylate (UV-6100B, manufactured by The Nippon Synthetic Chemical IN. Co., Lt.), 20 parts by weight 2-hydroxy propyl acrylate (LIGHT ESTER HOP-A, manufactured by Kyoeisha Chemical Co. Ltd.) and 1 part be weight Darocur 1173 photoinitiator, manufactured by Ciga-Geigy was prepared.

2.2. Liquid Adhesive Precursor T

A mixture of 16.5 g of 2-ethylhexylacrylate (EHA) from Rohm & Haas, Philadelphia, PA) and 8.5 g N-vinyl caprolactam (NVC) from International Specialty Products Performance Chemicals, Wayne, NJ) were combined with 0.01 g Irgacure 651 photoinitiator (from Ciba-Geigy). Following dissolution of the photoinitiator, the mixture was purged with nitrogen gas for about two minutes and then partially polymerized with UV light until the viscosity had risen to about 200 cps as measured using a Brookfield Viscometer with a No. 4 LTV spindle at 60 rpm. An additional charge of 0.04 g Irgacure 651 photoinitiator was then added to the mixture and allowed to dissolve by agitating the composition on a roller for about 30 minutes.

*Example 1*

A disc-shaped base member suitable for preparing a DVR disc with a recording capacity of 8 GB, comprising a disc-shaped polycarbonate substrate having an outer diameter of 120 mm, a thickness of 1.2 mm and a central hole with a diameter of 15 mm, was prepared by forming a master disc and subsequent injection moulding following the procedure described in EP 0,729,141, col. 6, lns. 14 - 46. The disc-shaped base member had a first flat major surface and a second major surface opposite to the first one which bore pits created by injection moulding. An approximately 50 nm thick aluminum layer was applied on the structure of pits on the second major surface by means of sputtering as is disclosed in EP 0,729,141, col. 6, lns. 47 - 55.

Liquid Adhesive Precursor S described above under Materials employed in the Examples was then applied in a bead-like ring on the information bearing surface of the polycarbonate disc. The Transmissive Cover Film A described above under Materials employed in the Examples and having the same dimension as the disc-shaped based member was then placed on top of the bead-like ring of adhesive precursor. The side of the film not bearing the removable protective sheet was bonded to the information bearing surface of the base member. After 3 seconds which were allowed for capillary action to slightly disperse the adhesive between the base member and the light transmissive cover film, the laminate was spun at 3000 rpm for 5 seconds so that a thin layer of the liquid precursor of the light-transmissive adhesive was obtained.

The cover film side of the bonded DVR disc construction was then exposed to a high pressure mercury lamp having a spectral output between 300 nm and 400 nm and an emission peak at 351 nm for 20 seconds to cure the adhesive precursor and complete the adhesive bond. A total energy of 550 $mJ/cm^2$ (NIST units) was employed.

The thickness of the cured adhesive layer was ca 10 µm.

*Example 2-3*

Example 1 was repeated with the exception that Light Transmissive Cover Films B, and C, respectively, were employed.

*Examples 4-6*

Adhesive Precursor T described above under Materials Employed in the Examples was employed with each of the Light Transmissive Cover Films A, B and C, respectively. The method of spin coating and curing the adhesive precursor was identical in each case.

**Claims**

1. Optical storage medium from which information can be read out and/or into which information can be recorded with a light beam (6), said optical storage medium comprising one or more base members (1) bearing on the side of the base members (1) on which the light beam (6) is incident, one or more information storage layers (3), at least one light-transmissive cover film (5) and one or more light-transmissive adhesive layers (4) bonding said cover films (5) to each other, to the surface (2) of the base members (1) on which the light beam (6) is incident and/or to one or more information storage layers (3), at least one of said adhesive layers being obtained by applying a curable liquid precursor of said adhesive with subsequent curing, said cover films (5) exhibiting a vertical birefringence of less than 0.001 at 20 °C at least at the wavelength or wavelength spectrum, respectively, of said light beam (6).

2. Optical storage medium according to claim 1 wherein said cover film or films (5) exhibit an in-plane retardation of less than ± 30 nm at 20 °C at least at the wavelength or wavelength spectrum, respectively, of said light beam (6).

3. Optical storage medium according to any of claims 1-2 wherein said curable liquid precursor of the light-transmissive adhesive exhibits when applied, a viscosity of between 10 to 10,000 mPa·s at 20 °C.

4. Optical storage medium according to claims 1-3, comprising one base member (1) the surface (2) of which bearing a structure of pits on which an information storage layer (3) is formed.

5. Optical storage medium according to claims 1-4 comprising one light-transmissive cover film (5) bonded to the information storage layer (3) on the surface (2) of the base member (1) by means of a light-transmissive adhesive layer (4) obtained by applying a liquid curable precursor of said adhesive with subsequent curing.

6. Optical storage medium according to one of claims 1 - 5 wherein the light-transmissive cover film or films (5) is or are formed by casting of one or more polymers dissolved in a solvent with subsequent drying and/or curing.

7. Optical storage medium according to claim 6 wherein the polymers dissolved in a solvent are selected from a group of polymers consisting of polycarbonate, cellulose triacetate or polyolefin-based polymers.

8. Optical storage medium according to one of claims 1 - 5 wherein the light-transmissive cover film or films (5) are formed by casting of a polymerizable precursor of a polymer with subsequent curing.

9. Optical storage medium according to claim 8 wherein the polymerizable precursor of the polymer comprises at least one acrylic-functional monomer which, when polymerized, displays a glass transition temperature of at least 10 °C and is not friable.

10. Optical storage medium according to claims 8 or 9 wherein the polymerizable precursor of the polymer contains blended therein one or more further polymers.

11. Optical storage medium according to claims 8 - 10 wherein the polymerizable precursor of the polymer comprises a monomer component selected from the group comprising (methyl)methacrylate, (methyl)ethylacrylate, (methyl) propylacrylate, lower amounts of (methyl) ($C_4$ - $C_8$ alkyl) acrylates, acrylonitrile, styrene alkyl acrylates, methacrylamides and alkyl substituted methacrylamides, one or more polymerization initiators and optionally one or more vinyl monomers having one or more unsaturated double bonds copolymerizable with the monomer(s) of the polymerizable precursor.

**12.** Optical storage medium according to any of claims 1 to 11 wherein the thickness of the light-transmissive cover film or films (5) is from 10 μm to 200 μm.

**13.** Optical storage medium according to any of claims 1 - 12 wherein the thickness of the light-transmissive adhesive layer or layers (4) obtained by curing its liquid curable precursor, is from 0.5 μm to 20 μm.

**14.** Optical storage medium according to any of claims 1 - 13 wherein the variation of the thickness of each light-transmissive cover film (5) and/or the variation of the thickness of the optical recording medium introduced by each light-transmissive cover film (5) as measured across an arbitrarily selected cross-section of the optical recording medium over its entire extension is not more than about ± 3 μm.

**15.** Optical storage medium according to any of claims 1 - 14 wherein the variation of the thickness of each light-transmissive adhesive layer (4) and/or the variation of the thickness of the optical recording medium introduced by each light-transmissive adhesive layer (4) as measured across an arbitrarily selected cross-section of the optical recording medium over its entire extension is not more than about ± 2 μm.

**16.** Optical storage medium according to any of claims 1 - 15 comprising one light-transmissive cover film (5) and one light-transmissive adhesive layer (4) wherein the sum of the variation of the thickness of the light-transmissive cover film (5) or the variation of the thickness of the optical medium introduced by the light-transmissive cover film (5), respectively, and the variation of the thickness of the light-transmissive adhesive layer (4) or the variation of the thickness of the optical recording medium introduced by the adhesive layer (4), respectively, is not more than ±4 μm, whereby such sum is measured across an arbitrarily selected cross-section of the optical recording medium over its entire extension.

**17.** Method of preparing an optical recording medium according to any of claims 1 - 16 comprising

(1) providing at least one base member (1) having a surface (2) on which the light beam (6) is incident, said surface optionally comprising a structure of pits bearing an information storage layer (3),
(2) providing a multilayer film (12) comprising in the order given a releasable protective film (7), a light-transmissive cover film (5) the inner surface of which optionally comprising a structure of pits bearing an information storage layer (3), and, optionally one or more further light-transmissive cover films (5') bonded to light-transmissive cover film (5) and/or to each other by means of one or more light-transmissive adhesive layers (4')
(3) applying the liquid curable precursor of the light-transmissive adhesive to at least one of surface (2) of the base member (1) and the exposed inner surface of multilayer film (12),
(4) assembling the base member (1) with the multilayer film (12) and bonding them to each other by curing the liquid curable.

**18.** Method according to claim 17 wherein at least one of the light-transmissive cover films (5) and (5'), respectively, are prepared by casting a curable precursor of such light-transmissive cover films (5) and (5'), respectively, onto a surface with subsequent curing, whereby said surface may be formed by a non-exposed surface of one of the layers of the multilayer film (12) or by a substrate on which the light-transmissive cover film is formed with subsequent incorporation as a cured layer into the multilayer film (12).

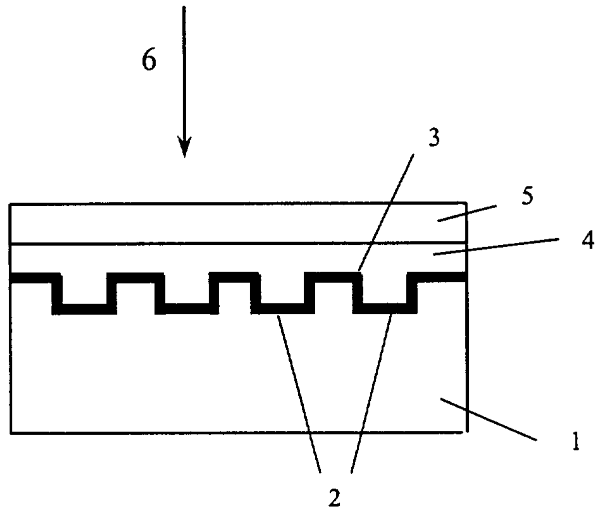


*Fig. 1a*

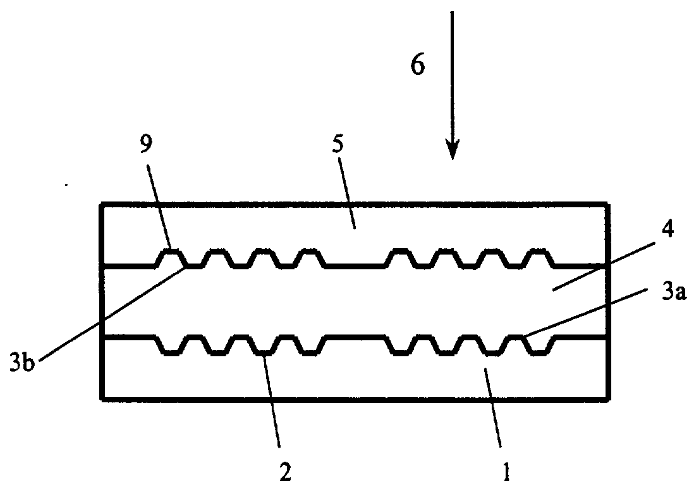


*Fig. 1b*

European Patent Office

# EUROPEAN SEARCH REPORT

Application Number
EP 00 12 3083

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 0 243 517 A (MATSUSHITA ELECTRIC IND CO LTD) 4 November 1987 (1987-11-04)<br>* claims 5,6; figure 5 *<br>--- | 1 | G11B7/24<br>G11B7/26 |
| Y | US 4 551 733 A (CORNET JEAN ET AL)<br>5 November 1985 (1985-11-05)<br>* column 3, line 14-30; claim 1; figure 1 *<br>--- | 1 | |
| A | US 5 824 385 A (ITOIGAWA MASAHIDE ET AL)<br>20 October 1998 (1998-10-20)<br>* claims 1,2; figure 1 *<br>--- | 1 | |
| A | EP 0 835 917 A (NIPPON KAYAKU KK)<br>15 April 1998 (1998-04-15)<br>* page 5, line 40-50 *<br>--- | 1 | |
| A | EP 0 345 360 A (FUJIMORI KOGYO CO)<br>13 December 1989 (1989-12-13)<br>* claim 1; figure 1 *<br>--- | 1 | TECHNICAL FIELDS SEARCHED (Int.Cl.7) |
| A | EP 0 999 033 A (ROHM & HAAS)<br>10 May 2000 (2000-05-10)<br>* claim 1; figure 1 *<br>--- | 1 | G11B |
| A | PATENT ABSTRACTS OF JAPAN<br>vol. 012, no. 062 (P-670),<br>25 February 1988 (1988-02-25)<br>& JP 62 204450 A (FUJITSU LTD),<br>9 September 1987 (1987-09-09)<br>* abstract *<br>--- | 1 | |
| A | EP 0 855 703 A (KITANO ENGINEERING CO LTD)<br>29 July 1998 (1998-07-29)<br>* claim 1; figure 1 *<br>---<br>-/-- | 17 | |

The present search report has been drawn up for all claims

| Place of search | Date of completion of the search | Examiner |
|---|---|---|
| BERLIN | 27 April 2001 | Bernas, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 00 12 3083

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 384 041 A (AGFA GEVAERT NV) 29 August 1990 (1990-08-29) * claims 1,2; figure 1 * --- | 17 | |
| A | US 5 972 250 A (INOUE KIYOSHI ET AL) 26 October 1999 (1999-10-26) * claim 1; figure 10 * ----- | 1 | |
| | | | TECHNICAL FIELDS SEARCHED (Int.Cl.7) |

The present search report has been drawn up for all claims

| Place of search | Date of completion of the search | Examiner |
|---|---|---|
| BERLIN | 27 April 2001 | Bernas, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 00 12 3083

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2001

| Patent document cited in search report | Publication date | Patent family member(s) | Publication date |
|---|---|---|---|
| EP 0243517 A | 04-11-1987 | DE 3677769 D | 04-04-1991 |
| US 4551733 A | 05-11-1985 | FR 2524186 A | 30-09-1983 |
| | | CA 1193364 A | 10-09-1985 |
| | | DE 3376904 D | 07-07-1988 |
| | | EP 0089874 A | 28-09-1983 |
| | | JP 2519025 B | 31-07-1996 |
| | | JP 58171735 A | 08-10-1983 |
| US 5824385 A | 20-10-1998 | JP 9069238 A | 11-03-1997 |
| EP 0835917 A | 15-04-1998 | US 6017603 A | 25-01-2000 |
| | | CN 1195364 A | 07-10-1998 |
| | | EP 0768353 A | 16-04-1997 |
| | | WO 9740115 A | 30-10-1997 |
| | | TW 387007 B | 11-04-2000 |
| EP 0345360 A | 13-12-1989 | JP 1162250 A | 26-06-1989 |
| | | JP 2545253 B | 16-10-1996 |
| | | DE 3855235 D | 30-05-1996 |
| | | DE 3855235 T | 05-09-1996 |
| | | WO 8906036 A | 29-06-1989 |
| | | US 5051314 A | 24-09-1991 |
| EP 0999033 A | 10-05-2000 | US 6183829 B | 06-02-2001 |
| | | CN 1253068 A | 17-05-2000 |
| | | JP 2000296544 A | 24-10-2000 |
| JP 62204450 A | 09-09-1987 | NONE | |
| EP 0855703 A | 29-07-1998 | JP 10208319 A | 07-08-1998 |
| | | US 5980677 A | 09-11-1999 |
| EP 0384041 A | 29-08-1990 | DE 68916530 D | 04-08-1994 |
| | | DE 68916530 T | 24-11-1994 |
| | | JP 2266979 A | 31-10-1990 |
| | | JP 2899711 B | 02-06-1999 |
| | | US 5147490 A | 15-09-1992 |
| US 5972250 A | 26-10-1999 | CN 1135638 A,B | 13-11-1996 |
| | | JP 8321074 A | 03-12-1996 |
| | | US 5681634 A | 28-10-1997 |

EPO FORM P0459

For more details about this annex : see Official Journal of the European Patent Office, No. 12/82